# EUROPÄISCHE PATENTSCHRIFT

(11) **EP 0 977 814 B1**
(45) Veröffentlichungstag und Bekanntmachung des Hinweises auf die Patenterteilung: **21.11.2001**
(21) Anmeldenummer: 98924172.4
(22) Anmeldetag: 22.04.1998
(51) Int. Cl.: C08L 101/00, C08L 67/02, C08K 3/08, C09C 1/64, C08J 11/06, B29B 17/00, B09B 3/00

(54) **VERFAHREN ZUR HERSTELLUNG VON KAFTFAHRZEUGKAROSSERIETEILEN UNTER VERWENDUNG VON CD-REZYKLAT ALS ZUSATZSTOFF**
METHOD FOR THE PRODUCTION OF AUTOMOBLE SURFACE PARTS USING RECYCLED CD MATERIAL AS AN ADDITIVE
METHODE POUR LA PRODUCTION DE PIECES DE CAROSSERIE UTILISANT DES PRODUITS DE RECYCLAGE DE CD COMME ADDITIF

(30) Priorität: 28.04.1997 DE 19717878
(43) Veröffentlichungstag der Anmeldung: 09.02.2000
(73) Patentinhaber: BASF AKTIENGESELLSCHAFT, 67056 Ludwigshafen (DE); GENERAL ELECTRIC COMPANY, Schenectady New York 10022 (US)
(72) Erfinder: ZELTNER, Doris, D-67354 Römerberg (DE); FRITSCHE, Thomas, D-67069 Ludwigshafen (DE); BERGMANN, Leander, D-63755 Alzenau (DE)
(74) Vertreter: Isenbruck, Günter, Dr.
(86) Internationale Anmeldenummer: EP9802380
(87) Internationale Veröffentlichungsnummer: WO9849238

(56) Entgegenhaltungen:
- EP-A- 0 061 147
- EP-A- 0 105 388
- EP-A- 0 107 015
- WO-A-95/05488
- DE-A- 4 123 199
- DE-A- 4 244 027
- DE-A- 4 311 138
- DE-A- 4 338 282
- US-A- 4 684 686
- DATABASE WPI Section Ch, Week 9706 Derwent Publications Ltd., London, GB; Class A23, AN 97-061982 XP002076569 & JP 08 311 326 A (TEIJIN KASEI LTD) , 26.November 1996
- DATABASE WPI Section Ch, Week 9632 Derwent Publications Ltd., London, GB; Class A23, AN 96-317602 XP002076570 & JP 08 142 054 A (TEIJIN KASEI LTD) , 4.Juni 1996

## Beschreibung

Die Erfindung betrifft Formmassen, enthaltend ein aluminiumhaltiges Rezyklat, Verfahren zu ihrer Herstellung sowie die Verwendung der Formmassen.

Compactdiscs sind Träger hochwertiger Rohstoffe. Sie bestehen aus einem Polycarbonat-Träger und einer auf diesem aufgebrachten Aluminiumschicht, die zusätzlich klarlackiert und mit einem Label bedruckt ist. Recycling von Compactdiscs (CD's) wird daher heute in großem Umfang betrieben. Rezykliert werden vor allem Fehlchargen aus der CD-Produktion sowie nicht abgesetzte Ware.

JP-A 0 311 326 beschreibt eine Zusammensetzung aus 15 - 95 Gew.-% einer Mischung von 10 - 100 Gew.-% kleingemahlenem Recyclat von ganzen compact discs enthaltend aromatische Polycarbonate mit 0-90 Gew.-% aromatischen Polycarbonat, und 5- 85 Gew.-% Acrylnitril/Butadien-Styrol-Copolymerisaten (ABS).

Andere Recyclingverfahren zielen auf die Wiedergewinnung des hochwertigen Polycarbonat-Trägermaterials ab. Dazu wird die Deckschicht aus Aluminium, Klarlack und Aufdruck nach unterschiedlichen Verfahren von dem Polycarbonat-Trägermaterial abgetrennt. So können das Altmaterial kleingemahlen und eingeschmolzen werden und feste Verunreinigungen durch Filtration aus der Schmelze abgetrennt werden. Granuliertes Altmaterial kann darüber hinaus einem chemischen Reinigungsprozeß, wie in DE-A 43 42 830 beschrieben, durch Auflösen der Beschichtung in konzentrierter Schwefelsäure unterzogen werden.

Bei den meisten bekannten Verfahren wird die Beschichtung jedoch mechanisch abgetrennt.

Aus der DE-A 44 03 173 ist ein Verfahren zum Entschichten von CD's durch mechanisches Abstrahlen der CD mit einem Granulat aus einem duroplastischen Kunststoff offenbart. Die entschichteten CD's werden zur Herstellung neuer CD's verwendet

In K. A. Boudrou and R. A. Malloy, Polym. Mater. Sci. Eng. 67 (1992), S. 401 - 403 ist eine Vorrichtung zur Wiedergewinnung des Polycarbonat-Trägennaterials aus CD's beschrieben, bei der die mechanische Entfernung der Aluminiumbschichtungen mittels einer rotierenden Bürste erfolgt.

In DE-A 43 40 595 ist zur Wiedergewinnung der Trägerschicht eine Vorrichtung zur Entschichtung beschrieben, bei der die Metallbeschichtung mit einem Fräskopf abgetragen wird.

Bei dem in DE-C 41 23 199 offenbarten Verfahren erfolgt die Entschichtung der CD's zur Wiedergewinnung von Polycarbonat durch einen spanabhebenden Schnitt mit einem Messer.

In der in US-A 5 203 067 beschriebenen Vorrichtung wird zum Entschichten der CD's ein rotierender, zylindrischer Hobel mit schraubenförmig auf diesem angeordnetem Messer verwendet

Alle diese Verfahren zielen auf die Wiedergewinnung des Polycarbonat-Trägermaterials ab, das mit frischem PC-Granulat gemischt vorzugsweise für die Herstellung neuer CD's eingesetzt wird.

Die abgetrennten Deckschichten aus Aluminium, Klarlack und Aufdruck müssen, sofern sich keine anderweitige Verwendung findet, deponiert werden, wodurch Entsorgungskosten verursacht werden. Zudem werden wertvolle Rohstoffe vergeudet, die andernorts zusätzlich abgebaut und aufbereitet werden müssen, wodurch die Umwelt zusätzlich belastet wird.

Der Erfindung liegt daher die Aufgabe zugrunde, das in den Deckschichten flächiger Informationsträger wie CD's enthaltene Aluminium einer sinnvollen Verwertung zuzuführen und damit das Recycling von Compactdiscs auf alle ihre wesentlichen Bestandteile auszudehnen.

Gelöst wird die Aufgabe durch ein Verfahren zur Herstellung von Kraftfahrzeug-Karosserieteilen aus Formmassen enthaltend
a) 50 bis 99,9 Gew.-% mindestens eines thermoplastischen oder duroplastischen Polymeren als Komponente A,
b) 0,1 bis 30, bevorzugt 0,5 bis 20 Gew.-% eines kleinteiligen Rezyklats als Komponente B aus
   b1) 0,01 bis 50 Gew.-% feinteiligem Aluminium, bevorzugt Aluminiumflitter, als Komponente B1,
   b2) 0,01 bis 50 Gew.-% Lack, bevorzugt Acryllack als Komponente B2 und
   b3) 0 bis 1 Gew.-% Druckfarbe als Komponente B3 und
   b4) 10 bis 99,9 Gew.-% Polycarbonat als Komponente B4,
   wobei die Summe der Gewichtsprozente der Komponenten B1 bis B3 100 Gew.-% beträgt,
   und
c) 0 bis 50 Gew.-% übliche Zusatzstoffe als Komponente C,
wobei die Summe der Gewichtsprozente der Komponenten A und B und gegebenenfalls C 100 Gew.-% beträgt,
mit den Schritten:
Herstellung des kleinteiligen Rezyklats (Komponente B) durch mechanische Abtrennung aluminiumhaltiger Deckschichten von der polymeren Trägerschicht flächiger Informationsträger und Zerkleinerung der Deckschichten,
inniges Vermischen der Komponenten A und ggf. C mit dem kleinteiligen Rezyklat, und
Verarbeiten der Formmassen durch Spritzgießen, Extrudieren, Kalandrieren oder Blasformen zu Formteilen.

### KOMPONENTE A

Die erfindungsgemäß eingesetzten Formmassen können als Komponente A beliebige thermoplastische oder duroplastische Polymere enthalten.

Bevorzugte thermoplastische Polymere sind Polycarbonat (PC), thermoplastische Polyester wie Polybutylenterephthalat (PBT) oder Polyethylenterephthalat (PET), vinylaromatische Polymere wie ABS-, ASA-, SAN-Copolymere und Polystyrol, Polyamide sowie entsprechende Blends der genannten Polymere, ferner Hochtemperaturthermoplaste wie PSU, PES, PEK, PEI und PPS sowie Polyolefine.

Als für die erfindungsgemäß eingesetzten Formmassen insbesondere geeignet sind nachstehend einige thermoplastische Polymerisate etwas näher erläutert.

### POLYESTER

Für die erfindungsgemäß eingesetzten Formmassen geeignete Polyester sind an sich bekannt und in der Literatur beschrieben. Sie enthalten einen aromatischen Ring in der Hauptkette, der von einer aromatischen Dicarbonsäure herrührt. Der aromatische Ring kann auch substituiert sein, z.B. durch Halogen wie Chlor und Brom oder durch C₁-C₄-Alkylgruppen wie Methyl-, Ethyl-, i- bzw. n-Propyl- und n-, i-bzw. tert.-Butylgruppen.

Die Polyester können durch Umsetzung von aromatischen Dicarbonsäuren, deren Estern oder anderer esterbildender Derivate derselben mit aliphatischen Dihydroxyverbindungen in an sich bekannter Weise hergestellt werden.

Als bevorzugte Dicarbonsäuren sind Naphthalindicarbonsäure, Terephthalsäure und Isophthalsäure oder deren Mischungen zu nennen. Bis zu 10 mol.-% der aromatischen Dicarbonsäuren können durch aliphatische oder cycloaliphatische Dicarbonsäuren wie Adipinsäure, Azelainsäure, Sebacinsäure, Dodecandisäuren und Cyclohexandicarbonsäuren ersetzt werden.

Von den aliphatischen Dihydroxyverbindungen werden Diole mit 2 bis 6 Kohlenstoffatomen, insbesondere 1,2-Ethandiol, 1,4-Butandiol, 1,6-Hexandiol, 1,4-Hexandiol, 1,4-Cyclohexandiol und Neopentylglykol oder deren Mischungen bevorzugt.

Als besonders bevorzugte Polyester sind Polyalkylenterephthalate, die sich von Alkandiolen mit 2 bis 6 C-Atomen ableiten, zu nennen. Von diesen werden insbesondere Polyethylenterephthalat, Polyethylennaphthalat und Polybutylenterephthalat, speziell Polybutylenterephthalat, bevorzugt

### POLYCARBONATE

Geeignete Polycarbonate, die in den erfindungsgemäß eingesetzten Formmassen als Komponente A bzw. A2 enthalten sein können, sind beispielsweise solche auf der Basis von Diphenolen der allgemeinen Formel I 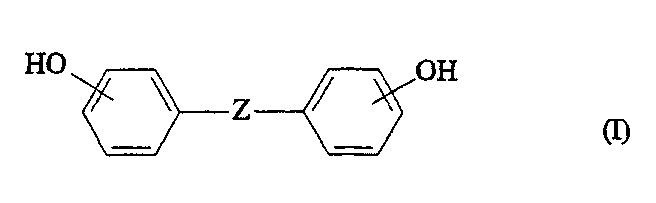 worin Z eine Einfachbindung, eine C₁-C₆-Alkylen-, eine C₂-C₆-Alkyliden-, eine C₃-C₁₂-Cycloalkylidengruppe sowie -S- oder -SO₂- bedeutet.

Beispiele für C₁-C₆-Alkylengruppen sind Methylen, Ethylen, Propylen, 1,1-Dimethylethylen, 1,3-Dimethylpropylen, 2-Methylbutylen und 2,3-Dimethylbutylen. Beispiele für C₂-C₆-Alkylidengruppen sind Ethyliden und 1,1- und 2,2-Propyliden. Beispiele für C₃-C₁₂-Cycloalkylidengruppe sind Cyclopentyliden, Cyclohexyliden und 3,3,5-Trimethylcyclohexyliden.

Bevorzugte Diphenole der allgemeinen Formel I sind beispielsweise Hydrochinon, Resorcin, 4,4'-Dihydroxydiphenyl, 2,2-Bis-(4-hydroxyphenyl)-propan, 2,4-Bis-(4-hydroxyphenyl)-2-methylbutan,2,2-Bis-(4-hydroxyphenyl)-cyclohexan. Besonders bevorzugt sind 2,2-Bis-(4-hydroxyphenyl)-propan und 1,1-Bis-(4-hydroxyphenyl)-cyclohexan sowie 1,1-Bis-(4-hydroxyphenyl)-3,3,5-trimethylcyclohexan.

Sowohl Homopolycarbonate als auch Copolycarbonate sind geeignet, bevorzugt sind neben den Bisphenol A-Homopolycarbonaten die Copolycarbonate von Bisphenol A.

Die geeigneten Homopolycarbonate können in bekannter Weise verzweigt sein, und zwar vorzugsweise durch den Einbau von 0,05 bis 2,0 mol-%, bezogen auf die Summe der eingesetzten Diphenole, an mindestens trifünktionellen Verbindungen, beispielsweise solchen mit drei oder mehr phenolischen Gruppen.

Als besonders geeignet haben sich Polycarbonate erwiesen, die relative Viskositäten ηᵣₑₗ von 1,1 bis 1,5, insbesondere von 1,25 bis 1,4 aufweisen. Dies entspricht mittleren Molekulargewichten M_{W} (Gewichtsmittelwert) von 10 000 bis 200 000, vorzugsweise von 20 000 bis 80 000.

Die Diphenole der allgemeinen Formel I sind an sich bekannt oder nach bekannten Verfahren herstellbar.

Die Herstellung der Polycarbonate kann beispielsweise durch Umsetzung der Diphenole mit Phosgen nach dem Phasengrenzflächenverfahren oder mit Phosgen nach dem Verfahren in homogener Phase (dem sogenannten Pyridinverfahren) erfolgen, wobei das jeweils einzustellende Molekulargewicht in bekannter Weise durch eine entsprechende Menge an bekannten Kettenabbrechern erzielt wird. Polycarbonate können auch durch Umesterung und Polymerisation in der Schmelze hergestellt werden.

Geeignete Kettenabbrecher sind beispielsweise Phenol, p-tert.-Butylphenol, aber auch langkettige Alkylphenole, wie 4-(1,3-Tetramethyl-butyl)-phenol gemäß DE-A 28 42 005, oder Monoalkylphenole oder Dialkylphenole mit insgesamt 8 bis 20 C-Atomen in den Alkylsubstituenten gemäß DE-A 35 06 472, wie beispielsweise p-Nonylphenol, 3,5-di-tert.-Butylphenol, p-tert.-Octylphenol, p-Dodecylphenol, 2-(3,5-Dimethyl-heptyl)-phenol und 4-(3,5-Dimethylheptyl)-phenol.

### VINYLAROMATISCHE POLYMERE, COPOLYMERE UND DEREN BLENDS

Das Molekulargewicht dieser an sich bekannten und im Handel erhältlichen Polymeren liegt im allgemeinen im Bereich von 1.500 bis 2.000.000, vorzugsweise im Bereich von 70.000 bis 1.000.000.

Nur stellvertretend seien hier vinylaromatische Polymere aus Styrol, Chlorstyrol, α-Methylstyrol und p-Methylstyrol genannt; in untergeordneten Anteilen (vorzugsweise nicht mehr als 20, insbesondere nicht mehr als 8 Gew.-%), können auch Comonomere wie (Meth)acrylnitril oder (Meth)acrylsäureester am Aufbau beteiligt sein. Besonders bevorzugte vinylaromatische Polymere sind Polystyrol und schlagzäh modifiziertes Polystyrol. Es versteht sich, daß auch Mischungen dieser Polymeren eingesetzt werden können.

Bevorzugte ASA-Polymerisate sind aufgebaut aus einer Weich- oder Kautschukphase aus einem Pfropfcopolymerisat aus:
A₁ 50 bis 90 Gew.-% einer Pfropfgrundlage auf Basis von
   A₁₁ 95 bis 99,9 Gew.-% eines C₂-C₁₀-Alkylacrylats und
   A₁₂ 0,1 bis 5 Gew.-% eines difunktionellen Monomeren mit zwei olefinischen, nicht konjugierten Doppelbindungen, und
A₂ 10 bis 50 Gew.-% einer Pfropfauflage aus
   A₂₁ 20 bis 50 Gew.-% Styrol oder substituierten Styrolen oder deren Mischungen, und
   A₂₂ 10 bis 80 Gew.-% Acrylnitril, Methacrylnitril, Acrylsäureestern oder Methacrylsäureestern oder deren Mischungen,
   in Mischung mit einer Hartmatrix auf Basis eines SAN-Copolymeren A₃ aus:
   A₃₁ 50 bis 90, vorzugsweise 55 bis 90 und insbesondere 65 bis 85 Gew.-% Styrol und/oder substituierten Styrolen und
   A₃₂ 10 bis 50, vorzugsweise 10 bis 45 und insbesondere 15 bis 35 Gew.-% Acrylnitril und/oder Methacrylnitril.

Bei der Komponente A₁ handelt es sich um ein Elastomeres, welches eine Glasübergangstemperatur von unter -20, insbesondere unter -30°C aufweist.

Für die Herstellung des Elastomeren werden als Hauptmonomere A₁₁ Ester der Acrylsäure mit 2 bis 10 C-Atomen, insbesondere 4 bis 8 C-Atomen eingesetzt. Als besonders bevorzugte Monomere seien hier tert.-, iso- und n-Butylacrylat sowie 2-Ethylhexylacrylat genannt, von denen die beiden letztgenannten besonders bevorzugt werden.

Neben diesen Estern der Acrylsäure werden 0,1 bis 5, insbesondere 1 bis 4 Gew.-%, bezogen auf das Gesamtgewicht A₁₁ + A₁₂ eines polyfünktionellen Monomeren mit mindestens zwei olefinischen, nicht konjugierten Doppelbindungen eingesetzt. Von diesen werden difunktionelle Verbindungen, d.h. mit zwei nicht konjugierten Doppelbindungen bevorzugt verwendet. Beispielsweise seien hier Divinylbenzol, Diallylfumarat, Diallylphthalat, Triallylcyanurat, Triallylisocyanurat, Tricyclodecenylacrylat und Dihydrodicyclopentadienylacrylat genannt, von denen die beiden letzten besonders bevorzugt werden.

Geeignete SAN-Polymere sind vorstehend (siehe A₃₁ und A₃₂) beschrieben.

Geeignete ABS-Polymere weisen einen vergleichbaren Aufbau wie vorstehend für ASA-Polymere beschrieben auf. Anstelle des Acrylatkautschukes A₁ der Pfropfgrundlage beim ASA-Polymer werden üblicherweise konjugierte Diene, eingesetzt, so daß sich für die Pfropfgrundlage A₄ vorzugsweise folgende Zusammensetzung ergibt:
A₄₁ 70 bis 100 Gew.-% eines konjugierten Diens und
A₄₂ 0 bis 30 Gew.-% eines oder mehrerer difunktionelle Monomeren mit zwei olefinischen nicht-konjugierten Doppelbindungen

Pfropfauflage A₂ und die Hartmatrix des SAN-Copolymeren A₃ bleiben in der Zusammensetzung unverändert. Derartige Produkte sind im Handel erhältlich. Die Herstellverfahren sind dem Fachmann bekannt, so daß sich weitere Angaben hierzu erübrigen.

### POLYAMIDE

Für die erfindungsgemäß eingesetzten Formmassen geeignete Polyamide weisen im allgemeinen eine Viskositätszahl von 90 bis 350, vorzugsweise 110 bis 240 ml/g auf, bestimmt in einer 0,5 gew.-%-igen Lösung in 96 gew.-%-iger Schwefelsäure bei 25°C auf gemäß ISO 307.

Bevorzugt sind Polyamide, die sich von Lactamen mit 7 bis 13 Ringgliedern ableiten, wie Polycaprolactam, Polycapryllactam und Polylaurinlactam sowie Polyamide, die durch Umsetzung von Dicarbonsäuren mit Diaminen erhalten werden.

Als Dicarbonsäuren sind Alkandicarbonsäuren mit 6 bis 12, insbesondere 6 bis 10 Kohlenstoffatomen und aromatische Dicarbonsäuren einsetzbar. Hier seien nur Adipinsäure, Azelainsäure, Sebacinsäure, Dodecandisäure und Terephthal- und/oder Isophthalsäure als Säuren genannt.

Als Diamine eignen sich besonders Alkandiamine mit 6 bis 12, insbesondere 6 bis 8 Kohlenstoffatomen sowie m-Xylylendiamin, Di-(4-aminophenyl)methan, Di-(4-aminocyclohexyl)-methan, 2,2-Di-(4-aminophenyl)-propan oder 2,2-Di-(4-aminocyclohexyl)-propan.

Bevorzugte Polyamide sind Polyhexamethylenadipinsäureamid, Polyhexamethylensebacinsäureamid und Polycaprolactam sowie Copolyamide 6/66, insbesondere mit einem Anteil von 5 bis 95 Gew.-% an Caprolactam-Einheiten.

Außerdem seien auch noch Polyamide erwähnt, die z.B. durch Kondensation von 1,4-Diaminobutan mit Adipinsäure unter erhöhter Temperatur erhältlich sind (Polyamid-4,6).

Weiterhin sind Polyamide, die durch Copolymerisation zweier oder mehrerer der vorgenannten Monomeren erhältlich sind, oder Mischungen mehrerer Polyamide geeignet, wobei das Mischungsverhältnis beliebig ist.

### POLYOLEFINE

Hier sind ganz allgemein Polyethylen und Polypropylen sowie Copolymerisate auf der Basis von Ethylen oder Propylen, gegebenenfalls auch mit höheren α-Olefinen zu nennen.

Besonders bevorzugte Formmassen enthalten eine Komponente A aus
a1) 10 bis 85, bevorzugt 20 bis 85 Gew.-% mindestens eines aromatischen Polyesters als Komponente A1,
a2) 10 bis 85, bevorzugt 15 bis 60 Gew.-% mindestens eines aromatischen Polycarbonats als Komponente A2
a3) 2 bis 35, bevorzugt 5 bis 30 Gew.-% Schlagzähmodifier als Komponente A3.
wobei die Summe der Gewichtsprozente der Komponenten A1 bis A3 100 Gew.-% beträgt.

Als Komponente A1 können die oben genannten Polyester eingesetzt werden. Bevorzugt sind Polyethylenterephthalat und Polybutylenterephthalat, insbesondere Polybutylenterephthalat.

Als Komponente A2 können die oben aufgeführten Polycarbonate eingesetzt werden.

Als Komponente A3 bevorzugte Schlagzähmodifier sind Pfropfcoplymerisate aus
a31) 40 bis 80, bevorzugt 50 bis 70 Gew.-% einer Pfropfgrundlage aus einem kautschukelastischen Polymeren mit einer Glasübergangstemperatur von unter 0°C als Komponente A31,
a32) 20 bis 60, bevorzugt 30 bis 50 Gew.-% einer Pfropfauflage aus
   a321) 50 bis 95, bevorzugt 60 bis 80 Gew.-% Styrol oder substituierten Styrolen oder Methylmethacrylat oder deren Mischungen als Komponente A321 und
   a322) 5 bis 50, bevorzugt 20 bis 40 Gew.-% Acrylnitril, Methacrylniril, Methylmethacrylat, Maleinsäureanhydrid oder deren Mischungen als Komponente A322.

Für die Pfropfgrundlage A31 kommen Polymerisate in Frage, deren Glasübergangstemperatur unterhalb von 10°C, bevorzugt unterhalb von 0°C, insbesondere unterhalb von -20°C liegt. Dies sind zum Beispiel Naturkautschuk, Syntesekautschuk auf der Basis von konjugierten Dienen, gegebenenfalls mit anderen Copolymeren, sowie Elastomere auf der Basis von C₁-C₈-Alkylestern der Acrylsäure, die gegebenenfalls weitere Comonomere enthalten können.

### KOMPONENTE B

Als Komponente B enthalten die erfindungsgemäß eingesetzten Formmassen 0,1 bis 30, bevorzugt 0,5 bis 20 Gew.-% eines kleinteiligen Rezyklats aus
b1) 0,01 bis 50 Gew.-%, bevorzugt 0,1 bis 30 Gew.-% feinteiligem Aluminium, bevorzugt Aluminiumflitter, als Komponente B1,
b2) 0,1 bis 50 Gew.-%, bevorzugt 1 bis 10 Gew.-% Lack, bevorzugt Acryllack als Komponente B2,
b3) 0 bis 1 Gew.-%, bevorzugt < 0,01 Gew.-% Druckfarbe als Komponente B3 und
b4) 10 bis 99,89 Gew.-%, bevorzugt 30 bis 99, besonders bevorzugt 50 bis 95 Gew.-% Polycarbonat als Komponente B4,
wobei die Summe der Gewichtsprozente der Komponenten B1 bis B4 100 Gew.-% beträgt,

Das kleinteilige Rezyklat kann durch mechanische Abtrennung aluminiumhaltiger Deckschichten von der polycarbonathaltigen polymeren Trägerschicht flächiger Informationsträger und Zerkleinerung der Deckschichten gewonnen werden. Vorzugsweise werden als flächige Informationsträger Compactdiscs eingesetzt.

Vorstehend und nachstehend soll der Begriff Rezyklat bedeuten, daß tatsächlich nur ein Anteil des Rezyklats von CD's eingesetzt wird, der die angegebenen Komponenten B1 bis B4 enthält. Diese sind die üblichen Bestandteile von CD's oberhalb der flächigen Trägerschicht und enthalten als Komponente B4 noch Betandteile der Trägerschicht. Der Begriff "Rezyklat" wird der Einfachheit halber verwendet.

Geeignete Verfahren und Vorrichtungen zur mechanischen Abtrennung der Deckschichten sind dem Fachmann bekannt und in den oben zitierten Druckschriften beschrieben. Die mechanische Abtrennung der Schichten kann, beispielsweise wie in DE-C 41 23 199 beschrieben, durch einen spanabhebenden Schnitt erfolgen. In Frage kommen auch die Abtrennung der Deckschicht unter Verwendung einer Fräse, eines Hobels, eines Messers oder einer Schleifbürste.

Das mechanische Abtrennverfahren kann eine zumindest teilweise Zerkleinerung der Deckschichten einschließen. Im allgemeinen fallen die abgetrennten Deckschichten als mehr oder weniger kleinteilige Pulver oder Späne an. Die Pulver oder Späne können nachfolgend weiter bis zur gewünschten Korngröße zerkleinert werden. Es können übliche Trocken- und Naßmahlverfahren zur Zerkleinerung von Metallen zur Anwendung kommen. Vorzugsweise erfolgt die Zerkleinerung im Kaltmahlverfahren. Das Kaltmahlverfahren beruht auf der Versprödung vieler Materialien bei tiefen Temperaturen, wodurch sie sich mit relativ geringem Energieaufwand zerkleinern und in ihre Bestandteile zerlegen lassen. Beispielsweise kann die abgetrennte Deckschicht, die gegebenenfalls zu einem Granulat vorzerkleinert worden ist, in einem Wirbelschneckenkühler oder Wirbelrohrkühler durch Verdampfen von flüssigem Stickstoff auf unter -40°C abgekühlt und nachfolgend in einer Mühle zerkleinert werden. Es kann sich ein Schritt zum Aufkonzentrieren des Aluminiumanteils im Rezyklat, beispielsweise unter Ausnutzung des Dichtunterschiedes zwischen Aluminium- und Polymerkomponente, anschließen. Geeignete Vorrichtungen sind dem Fachmann bekannt.

Um ein Produkt mit gewünschter mittlerer Korngröße und Korngrößenverteilung zu erhalten, kann sich dem Mahlprozeß zusätzlich ein Schritt zum Auftrennen des Mahlgutes nach Kornklassen anschließen. Es können übliche Verfahren zum Trocken- oder Naßklassieren zum Einsatz kommen.

Vorzugsweise erfolgt die Auftrennung des Mahlgutes durch Sieben. Bevorzugt weisen die durch Sieben gewonnenen Fraktionen Teilchen einer Größe < 1000 *µ*m, besonders bevorzugt < 500 *µ*m, insbesondere 1 bis 500 *µ* m auf.

Das kleinteilige Rezyklat kann Aluminiumpartikel unterschiedlicher Teichengrößen, Teilchengrößenverteilung und Geometrie enthalten feinteiliges Aluminium. Die Aluminiumpartikel können sphärische oder nichtsphärische, plättchenförmige Partikel unterschiedlicher Dicke enthalten. Die nichtsphärischen, plättchenförmigen Partikel werden im folgenden als Flitter bezeichnet.

Vorzugsweise weist das als Komponente B zur Herstellung erfindungsgemäßen Formmassen eingesetzte Rezyklat Aluminiumflitter mit unregelmäßiger Geometrie auf.

### KOMPONENTE C

Als Komponente C können die erfindungsgemäß eingesetzten Formmassen übliche Zusatzstoffe und Verarbeitungshilfemittel enthalten.

Als Zusatzstoffe können in Mengen von bis zu 50 Gew.-% z. B. faserförmige Füllstoffe wie Glasfasern, Kohlenstoffasern, Aramid-Fasern oder Kaliumtitanat-Fasern und als weitere Füllstoffe Magnesiumhydroxid, Aluminiumhydroxid, Kaolin, Wollastonit, Talkum und Kreide vorliegen.

Ferner seien - insbesondere wenn diese nicht bereits als Komponente A3 vorliegen - Schlagzähmodifier genannt (auch als kautschukelastische Polymerisate oder Elastomere bezeichnet), die in Mengen von bis zu 20 Gew.-%, bevorzugt bis zu 15 Gew.-% enthalten sein können.

Als Schlagzähmodifier - siehe auch weiter oben - geeignet sind übliche Kautschuke, z.B. Ethylencopolymere mit reaktiven Gruppen, Acrylatkautschuk und Polymerisate konjugierter Diene, wie Polybutadienkautschuk und Polyisoprenkautschuk. Die Dienpolymerisate können, in an sich bekannter Weise, teilweise oder vollständig hydriert sein. Außerdem kommen z.B. in Betracht: hydrierter Styrolbutadienkautschuk, Ethylen-Propylen-Dien-Kautschuk, Polybutylen- und Polyoctenamerkautschuke, Ionomere, Blockcopolymere aus vinylaromatischen Monomeren mit Dienen wie Butadien oder Isopren (z. B. bekannt aus EP-A 0 062 282) mit dem Aufbau M¹M²-, M¹M²M¹M²-oder M¹M²M¹-, wobei diese Blockpolymerisate auch Segmente mit statistischer Verteilung enthalten können, sowie Stern-Block-Copolymere. Als besonders geeignet haben sich Polymerisate konjugierter Diene wie Polybutadienkautschuk oder Polyisoprenkautschuk erwiesen. Derartige synthetische Kautschuke sind dem Fachmann geläufig und zusammenfassend in "Ullmanns Encyklopädie der Technischen Chemie", 4.Auflage, Bd.13, Seiten 595 bis 634, Verlag Chemie GmbH, Weinheim 1977, beschrieben.

Als Zusatzstoffe seien außerdem Hitze- und Lichtstabilisatoren, Gleit- und Entformungsmittel, Flammschutzmittel sowie weitere Färbemittel wie Farbstoffe und Pigmente in üblichen Mengen genannt.

Die Formmassen können nach an sich bekannten Verfahren durch inniges Vermischen der Komponenten A, B und gegebenenfalls C hergestellt werden, indem man die Ausgangskomponenten in üblichen Mischvorrichtungen wie Schneckenextrudern, Brabender-Mühlen oder Banbury-Mühlen mischt und anschließend extrudiert. Nach der Extrusion kann das Extrudat abgekühlt und zerkleinert werden. Es können auch einzelne Komponenten vorgemischt werden und dann die restlichen Ausgangsstoffe einzeln und/oder ebenfalls gemischt hinzugegeben werden. Die Mischtemperaturen liegen in der Regel zwischen 230 und 290°C. Die mit den erfindungsgemäßen Aluminiumpigmenten eingefärbten thermoplastischen Formmassen können nach üblichen Verfahren wie Spritzgießen, Extrudieren, Kalandrieren und Blasformen zu Formteilen verarbeitet werden.

Es wurde gefunden, daß sich das aluminiumflitterhaltige Rezyklat besonders leicht mit den Komponenten A und C vermischen und zu den thermoplastischen Formmassen verarbeiten läßt. Möglicherweise sind die guten Verarbeitungseigenschaften des Rezyklats auf die im Rezyklat enthaltenen Bestandteile Polycarbonat und Klarlack zurückzuführen.

Die Verwendung der aluminiumflitterhaltigen Formmassen kann ästhetischen Zielen dienen. Durch die in den Formmassen enthaltenen Aluminiumflitter werden, wie in J. D. Kerr und B. Klein, Kunststoffe 85 (1995), S. 8 beschrieben, spezielle optische Effekte erzielt Mögliche Anwendungsgebiete sind alle Einsatzgebiete, auf denen mit kommerziellen Aluminiumpigmenten eingefärbte Formmassen zur Erzielung optischer Effekte üblicherweise eingesetzt werden. Die Aluminiumflitter verleihen den erfindungsgemäßen Formmassen und den daraus hergestellten Kunststoffteilen ein metallisches Aussehen oder erzeugen Glitzer- oder Perleffekte. Die erzielten optischen Effekte werden in hohem Maße von Größe und Geometrie der Pigmente gesteuert. Die optischen Eigenschaften von Aluminiumpigmente in Abhängigkeit von ihrer Form und Größenverteilung sowie die durch die durch verschiedene Aluminiumpigmente erzielbaren optischen Effekte sind dem Fachmann bekannt bzw. in dem vorstehend genannten Artikeln beschrieben. Um typische Metalliceffekte zu erzielen, enthalten die Formmassen Aluminiumpigmente mit einer plättchenförmigen Geometrie.

Die Formmassen werden erfindungsgemäß zur Herstellung von Kraftfahrzeug-Karosserieteilen verwendet.

Bevorzugt werden die erfindungsgemäßen Formmassen im Fahrzeugbau zur Herstellung großflächiger Karosserieaußenteile wie Kotflügel, Türbeplankungen und Heckklappen zur Erzielung eines Metalliceffektes verwendet In einer besonders bevorzugten Ausführungsform der Erfindung werden dazu Formmassen enthaltend Polycarbonat/Polybutylenterephthalat (PC/PBT)-Blends verwendet.

Die Erfindung wird durch das nachstehende Beispiel näher erläutert:

### BEISPIEL

Es wurden folgende Komponenten eingesetzt:
A: 580 g Polybutylenterephthalat (z.B. Ultradur® B4520 der BASF AG, Ludwigshafen, DE), Viskositätszahl = 120 ml/g
B: 150 g Polycarbonat (z.B. Lexan 161 der GE Plastics, BoZ, NL),
   VZ = 61 ml/g
C: 100 g MBS-Kautschuk (z.B. Paraloid EXL 3600 von Rohm & Haas, Frankfurt, DE)
D: 10 g 4,4'-Biphenylen-diphosphonigsäure-tetra-(2,4-di-tert.-butylphenyl)ester (Irgafos® P-EPQ der Ciba Geigy, Basel, CH)
E: 3 g 2-(2-Hydroxy-3,5-di-(1,1-dimethylpropyl)phenyl)benzotriazol (Tinuvin® 328 der Ciba Geigy, Basel, CH)
F: 10 g Pentaerythrityl-tetra-(3-(3,5-di-tert.-butyl-4-lydroxy)phenyl)propionat (Irganox® 1010 der Ciba-Geigy, Basel, CH)
G: 2,25 g Pentaerythrittetrastearat (z.B. Loxiol® P861/35 der Henkel AG, Düsseldorf, DE
H: 1 g Talkum (z.B. Talkum IT Extra der Norwegian Talc AS, N)
I: 150 g Rezyklat mit einer Teilchengröße < 500 *µ*m enthaltend
   93,9 Gew.-% Polycarbonat
   6,0 Gew.-% Acryllack
   0,1 Gew.-% Aluminium
   < 0,01 Gew.-% Druckfarbe,
   hergestellt aus den Deckschichten von Compactdiscs.

Die Komponenten A) bis I) wurden gemischt und bei 260°C gemeinsam in ein Wasserbad extrudiert. Nach Granulierung und Trocknung wurden auf einer Spritzgußmaschine Prüfkörper gespritzt. Die Prüfkörper wiesen einen Metalliceffekt auf.

## Patentansprüche

1. Verfahren zur Herstellung von Kraftfahrzeug-Karosserieteilen aus Formmassen enthaltend
a) 50 bis 99,9 Gew.-% mindestens eines thermoplastischen oder duroplastischen Polymeren als Komponente A,
b) 0,1 bis 30 Gew.-% eines kleinteiligen Rezyklats als Komponente B aus
b1) 0,01 bis 50 Gew.-% feinteiligem Aluminium als Komponente B1,
b2) 0,1 bis 50 Gew.-% Lack als Komponente B2
b3) 0 bis 1 Gew.-% Druckfarbe als Komponente B3 und
b4) 10 bis 99,89 Gew.-% Polycarbonat als Komponente B4,
wobei die Summe der Gewichtsprozente der Komponenten B1 bis B4 100 Gew.-% beträgt,
und
c) 0 bis 50 Gew.-% übliche Zusatzstoffe als Komponente C,
wobei die Summe der Gewichtsprozente der Komponenten A und B und gegebenenfalls C 100 Gew.-% beträgt,
mit den Schritten:
i) Herstellung des kleinteiligen Rezyklats (Komponente B) durch mechanische Abtrennung aluminiumhaltiger Deckschichten von der polymeren Trägerschicht flächiger Informationsträger und Zerkleinerung der Deckschichten,
ii) inniges Vermischen der Komponenten A und ggf. C mit dem kleinteiligen Rezyklat, und
iii) Verarbeiten der Formmassen durch Spritzgießen, Extrudieren, Kalandrieren oder Blasformen zu Formteilen.

2. Verfahren nach Anspruch 1, **dadurch gekennzeichnet, daß** die Formmassen eine Komponente A aus
a1) 10 bis 85 Gew.-% eines aromatischen Polyesters als Komponente A1,
a2) 10 bis 85 Gew.-% eines aromatischen Polycarbonats als Komponente A2, und
a3) 2 bis 35 Gew.-% Schlagzähmodifier als Komponente A3,
enthalten, wobei die Summe der Gewichtsprozente der Komponenten A1 bis A3 100 Gew.-% beträgt.

3. Verfahren nach Anspruch 1 oder 2, **dadurch gekennzeichnet, daß** das kleinteilige Rezyklat (Komponente B) als Komponente B4 50 bis 95 Gew.-% Polycarbonat enthält.

4. Verfahren nach einem der Ansprüche 1 bis 3 zur Herstellung großflächiger Außenteile für Kraftfahrzeuge.

5. Verwendung eines kleinteiligen Rezyklats aus
b1) 0,01 bis 50 Gew.-% feinteiligem Aluminium als Komponente B1,
b2) 0,1 bis 50 Gew.-% Lack als Komponente B2
b3) 0 bis 1 Gew.-% Druckfarbe als Komponente B3 und
b4) 10 bis 99,89 Gew.-% Polycarbonat als Komponente B4,
wobei die Summe der Gewichtsprozente der Komponenten B1 bis B4 100 Gew.-% beträgt,
zur Herstellung von Kraftfahrzeug-Karosserieteilen aus Formmassen, wie sie in Anspruch 1 definiert sind.

6. Verwendung von Formmassen, wie sie in einem der Ansprüche 1 bis 3 definiert sind, zur Herstellung von Kraftfahrzeug-Karosserieteilen.

## Claims

1. A process for producing motor vehicle body parts from molding compositions comprising
a) from 50 to 99.9% by weight of at least one thermoplastic or thermosetting polymer as component A,
b) from 0.1 to 30% by weight of a finely particulate recyclate as component B, comprising
b1) from 0.01 to 50% by weight of finely divided aluminum as component B1,
b2) from 0.1 to 50% by weight of varnish as component B2,
b3) from 0 to 1% by weight of printing ink as component B3, and
b4) from 10 to 99.89% by weight of polycarbonate as component B4,
the sum of the percentages by weight of components B1 to B4 being 100% by weight,
and
c) from 0 to 50% by weight of customary additives as component C,
the sum of the percentages by weight of components A and B and, if used, C being 100% by weight,
comprising the steps of:
i) producing the finely particulate recyclate (component B) by mechanically separating aluminum-containing top layers from the polymeric support layer of two-dimensional data media, and comminuting the top layers,
ii) intimately mixing components A and, if used, C with the finely particulate recyclate, and
iii) producing the molding compositions by injection molding, extrusion, calendering or blow molding to give moldings.

2. A process as claimed in claim 1, wherein the molding compositions comprise a component A comprising
a1) from 10 to 85% by weight of an aromatic polyester as component A1,
a2) from 10 to 85% by weight of an aromatic polycarbonate as component A2, and
a3) from 2 to 35% by weight of impact modifiers as component A3,
the sum of the percentages by weight of components A1 to A3 being 100% by weight.

3. A process as claimed in claim 1 or 2, wherein the finely particulate recyclate (component B) comprises as component B4 from 50 to 95% by weight of polycarbonate.

4. A process as claimed in one of claims 1 to 3 for producing exterior parts of large surface area for motor vehicles.

5. The use of a finely particulate recyclate comprising
b1) from 0.01 to 50% by weight of finely divided aluminum as component B1,
b2) from 0.1 to 50% by weight of varnish as component B2,
b3) from 0 to 1% by weight of printing ink as component B3, and
b4) from 10 to 99.89% by weight of polycarbonate as component B4,
the sum of the percentages by weight of components B1 to B4 being 100% by weight,
to produce motor vehicle body parts from molding compositions as defined in claim 1.

6. The use of molding compositions as defined in one of claims 1 to 3 to produce motor vehicle body parts.

## Revendications

1. Procédé de préparation de pièces de carrosseries automobiles à partir de masses de moulage contenant:
a) 50 à 99,9% en poids d'au moins un polymère thermoplastique ou thermodurcissable en tant que composant A,
b) 0,1 à 30% en poids d'un produit de recyclage finement divisé en tant que composant B, constitué de
b1) 0,01 à 50% en poids d'aluminium finement divisé en tant que composant B1,
b2) 0,1 à 50% en poids de vernis en tant que composant B2,
b3) 0 à 1% en poids d'encre d'imprimerie en tant que composant B3 et
b4) 10 à 99,89% en poids de polycarbonate en tant que composant B4,
la somme des pourcentages en poids des composants B1 à B4 totalisant 100 en poids,
et
c) 0 à 50% en poids d'additifs usuels en tant que composant C, où la somme des pourcentages en poids des composants A et B et éventuellement C totalise 100% en poids,
par les étapes suivantes:
i) préparation du produit recyclé finement divisé (composant B) par séparation mécanique des couches de couverture contenant de l'aluminium de la couche de support polymère d'un support d'information plane et broyage des couches de couverture
ii) mélange intime des composants A et éventuellement C avec le produit recyclé finement divisé, et
iii) travail des masses de moulage par moulage par injection, extrusion, calandrage ou moulage par soufflage afin de produire des pièces moulées.

2. Procédé selon la revendication 1, **caractérisé en ce que** les masses de moulage contiennent un composant A constitué de
a1) 10 à 85% en poids d'un polyester aromatique en tant que composant A1,
a2) 10 à 85% en poids d'un polycarbonate aromatique en tant que composant A2, et
a3) 2 à 35% en poids d'un modificateur de résistance au choc en tant que composant A3,
les sommes des pourcentages en poids des composants A1 à A3 totalisant 100% en poids.

3. Procédé selon la revendication 1 ou 2, **caractérisé en ce que** le produit de recyclage finement divisé (composant B) contient de 50 à 95% en poids d'un polycarbonate en tant que composant B4.

4. Procédé selon l'une des revendications 1 à 3 pour la préparation de pièces de carrosseries de grande surface pour véhicules automobiles.

5. Utilisation d'un produit de recyclage finement divisé composé de:
b1) 0,01 à 50% en poids d'aluminium finement divisé en tant que composant B1,
b2) 0,1 à 50% en poids de vernis en tant que composant B2,
b3) 0 à 1% en poids d'encre d'imprimerie en tant que composant B3 et
b4) 10 à 99,89% en poids de polycarbonate en tant que composant B4,
la somme des pourcentages en poids des composants B1 à B4 totalisant 100% en poids,
pour la production de pièces de carrosseries de véhicules automobiles à partir de masses de moulage comme définies à la revendication 1.

6. Utilisation de masses de moulage telles que définies par l'une des revendications 1 à 3 pour la production de pièces de carrosseries pour véhicules automobiles.
